# EUROPEAN PATENT SPECIFICATION

(11) **EP 1 295 528 B1**
(45) Date of publication and mention of the grant of the patent: **27.12.2006**
(21) Application number: 02380196.2
(22) Date of filing: 20.09.2002
(51) Int. Cl.: A21D 13/08, A21C 9/04, A21C 9/06, A21C 11/16

(54) **Filled biscuit and production procedure thereof**
Gefüllter Keks und Verfahren zu dessen Herstellung
Biscuit fourré et procédé pour sa fabrication

(30) Priority: 20.09.2001 ES 200102101
(43) Date of publication of application: 26.03.2003
(73) Proprietor: SOS Cuétara, S.A., 28046 Madrid (ES)
(72) Inventor: Salazar Bello, Jesus, Ignacio, 28046 Madrid (ES)
(74) Representative: Carpintero Lopez, Francisco

(56) References cited:
- WO-A-00/59309
- WO-A-01/93687
- WO-A-94/28727
- GB-A- 2 107 964
- US-A- 1 621 863
- US-A- 4 382 970
- US-A- 5 059 433
- US-A- 5 514 397
- US-A- 5 962 055

## Description

### OBJECT OF THE INVENTION

The present invention relates to a filled biscuit, specifically to a biscuit structured on the basis of a wrapping of biscuit proper, understanding as such a edible pastry composed, for example, of flour, sugar, optionally egg, shortening or diverse preserves, duly baked, wrapping which encloses on its interior another type of edible especially granular product, like for example cereals, chopped dried fruits, etc.

The invention also concerns the production procedure of this type of biscuit.

Therefore, the invention falls within the field of foodstuffs, specifically in the field of edible biscuits.

### BACKGROUND OF THE INVENTION

As is well known, a conventional edible biscuit, in its simplest form, is constituted on the basis of a dough of flour and sugar, to which egg is frequently added, as well as a great variety of additives to modify its flavour, smell, etc., dough which, when moulded to achieve the final shape foreseen for the biscuit, undergoes a process of baking, after which it is in condition for consumption.

Providing the biscuits with a supplementary product is also known, like for example chocolate, creams, etc., to which end the biscuits of this type are structured in a multi-layer manner, specifically on a basis of two outer layers of biscuit between which is placed an intermediate layer of the product in question, forming a sandwich type structure.

This solution, independently of the fact that it shows the observer the product constituting of the intermediate layer, at the perimeter of the biscuit, which is not desirable on occasions, presents as a fundamental problem a drastic limitation with regard to the types of product which can be employed as filling, since it is essential that the latter adhere to the outer layers of biscuit proper, so that such an embodiment is feasible only with pasty or sticky products, with a considerable degree of adherence, both in themselves and with respect to the biscuit layers.

A solution of the aforementioned type is not suitable, for example, for using cereals or dried fruits as filling material.

In an endeavour to obviate this problem, the mixing is also known of the filling material with the dough which constitutes the biscuit proper, prior to the baking thereof, so that said filling material is dispersed throughout the biscuit dough, with its granules surrounded by the latter, however this solution does not allow a differentiation between the different edible products which form part of the biscuit, their flavours being mixed, which can be acceptable on occasions, but completely unacceptable in those cases wherein a clear differentiation of flavours is sought for the products which form part of the biscuit.

International PCT publication WO 00/59309 describes a multi-layer toaster product, comprising first and second layers constructed of different materials.

In the U.S. patent US-5.514.397 a process for making a layered dought sheet product is described, in which multi-banded food products afre made out of various doughs whrein the bands have different characteristics.

The U.S. patent US-5.962.055 discloses a process for the preparation of edible food products containing a filling. The edible filling is prepared by extrusion-cooking ingredients which includes cereal ingredients.

The PCT publication WO 03/022059 describes how a dough or baked product can be prepared in an oven in the form of a pizza slice with an enclosed filling.

<The U.S. patent US-4.382970 discloses a foodstuff incorporating a filling enclosed between two sheets of dough.

International PCT publication WO 94/28727 describes a method for forming center filled pillow biscuits. >

### DESCRIPTION OF THE INVENTION

The filled biscuit which the invention proposes resolves the problem explained above in a fully satisfactory way, whereby, allowing the use as filling material of granular products, such as cereals or dried fruits, duly ground, of which mention has been made above, it also allows that said filling material is physically free of the outer layers of biscuit proper, with a clear differentiation of flavours, which is perfectly stabilized on the inside of the biscuit as a whole and which, also, is not visible from the exterior.

To this end and more specifically, it is constituted by means of two laminas of biscuit proper, joined at the perimeter to each other defining an internal pocket of appropriate volume for the quantity of granular material foreseen for forming part therein and, obviously, housed in said pocket. Logically, when forming a wrapping of biscuit proper, completely closed, the latter retains without difficulty, the granular material up to the moment of consumption of the biscuit as a whole, with no requirement for adherence taking place between the same and the material constituting the biscuit proper, said granular material being also completely hidden in the normal view of the biscuit, and without it affecting the external appearance thereof.

The production of this filled biscuit starts with biscuit dough with any conventional and appropriate recipe, which is subjected to a process of rolling to obtain a lower lamina, of undefined dimensions, which is deposited on a conveyor belt or similar, so that on this lower lamina is subsequently deposited the granular filling material, forming strips of width in accord with that foreseen for the biscuits, slightly under-dimensioned with respect to the latter and with the collaboration of the corresponding feeder, a new layer of rolled biscuit dough being duly supplied, similar to the first and which will constitute the upper layer of biscuit, the whole finally undergoing a stage of measurement and flattening of the laminas against the filling.

Subsequently one proceeds to a stage of longitudinal cutting, in which bands are obtained of undefined width coinciding with that foreseen for the biscuits, as well as surplus trimmings of dough which are reused; finally said lot of longitudinal bands undergoes a stage of transversal cutting the outcome of which is the individualisation of the different biscuits, taking place in this cutting stage, both in the longitudinal sense and in the transversal sense, the sealing by adhesion between the edges of the laminas of biscuit pastry in correspondence with the entire perimeter of each individual biscuit obtained.

Finally, the biscuits obtained, conveniently placed on trays or on any other type of holder, are subjected to a terminal stage of baking, in itself conventional.

As may be deduced from the foregoing explanation, both the biscuit which the invention proposes and the procedure of obtaining the same, permit the addition to the granular material which essentially constitutes the heart thereof of any type of additive such as honey, chocolate, etc.

### DESCRIPTION OF THE DRAWINGS

To complete the description that is being made and with the object of assisting in a better understanding of the characteristics of the invention, in accordance with a preferred example of practical embodiment thereof, as an integral part of said description, the same is accompanied by a set of drawings wherein, by way of illustration and not restrictively, the following has been represented:
Figure 1. - It shows the schematic representation in profile and in cross-section of a filled biscuit prepared in accordance with the object of the present invention.
Figure 2. - It shows a schematic representation in side elevation of the procedure for obtaining the filled biscuits, prior to the individualisation thereof.
Figure 3. - It shows, according to the schematic representation in plan, the product obtained after the operational stage represented in figure 2.
Figure 4. - It shows, also according to the plan view, the product of figure 3 in the stage of longitudinal cutting.
Figure 5. - It shows, finally and according to representations similar to those of figures 3 and 4, the same product of such figures in the stage of transversal cutting.

### PREFERRED EMBODIMENT OF THE INVENTION

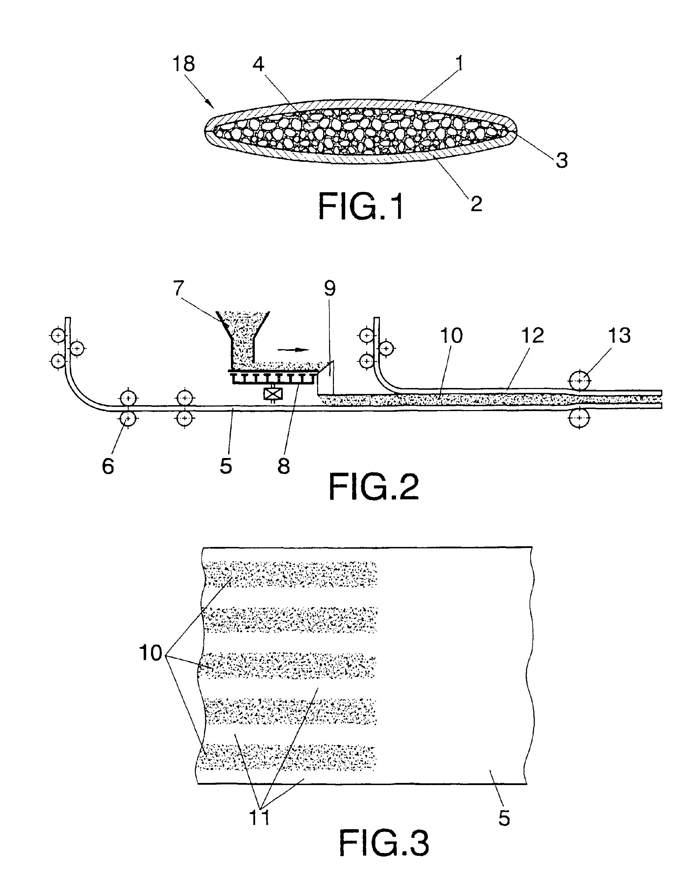

In figure 1, corresponding to the practical embodiment of a biscuit according to the invention, it is observed how the biscuit mentioned is constituted by means of two layers of biscuit proper (1 and 2), which preferably will adopt a configuration appreciably rectangular, although they can be appreciably circular or of any other type, laminas or layers (1 and 2) which are attached directly to each other, on their perimeter (3), defining a pocket occupied by the filling material (4) which, as has been stated above, will be an essentially granular material.

The wrapping (1-2) of biscuit can be obtained, for example with a typical recipe of:
Wheat flour 56%
Fat 11%
Sugars 19%
Sweeteners 0,4%
Miscellaneous: Aromas, anti-oxidants, emulsifiers, etc., remainder, up to 100%.

On the other hand, the filling material (4) can be prepared with a typical recipe consisting of:
Rolled corn cereals, or
Puffed rice cereals, or
Puffed chocolate-coated rice cereals, or
Mixtures of rolled or puffed cereals.

The components which will form the wrapping (1-2) of the biscuit, whatever of those previously mentioned, are properly mixed and rolled to obtain, in the first place, a continuous band of biscuit (5) of any appropriate width, depending on the type of machinery used in the process of preparing the biscuits, and of undefined length, which is fed to a conveyor belt, for example over a set of measuring rollers (6), and on this lower lamina (5) of biscuit the essentially granular material selected in each case is deposited, with the collaboration of a dosing chute (7) which deposits the product on a vibrator (8) which makes it advance toward a multiple dropping funnel (9) which is the thing which really deposits said product on the lower lamina of biscuit (5) forming longitudinal and parallel strips (10), of appropriate width for that foreseen for the biscuits, individualised by strips (11) of those which the biscuit lamina (5) is free of filling material.

Subsequently, and in a similar way, a second lamina (12) of biscuit dough is fed to the body shown in figure 3, which lamina will constitute the upper layer of the body, and such body undergoes a stage of measurement and flattening of the biscuit laminas against the filling, for example with the collaboration of transversal rollers (13).

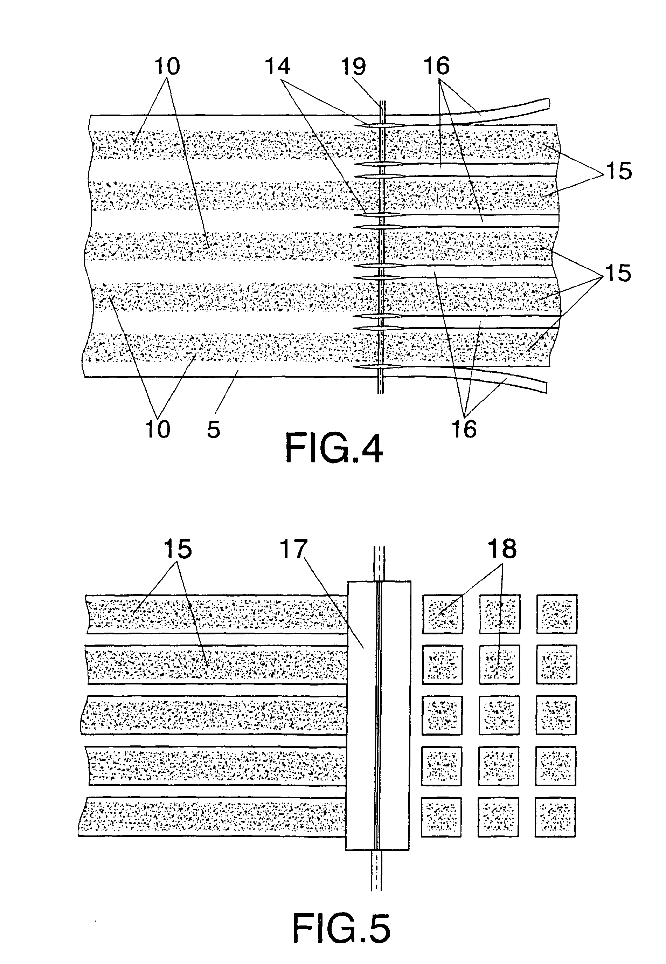

Subsequently, and as is seen in figure 4, the continuous band so obtained undergoes a stage of longitudinal cutting, with the collaboration of blades (14), mounted on a shaft (19) transversal to the continuous strip, like for example circular and revolving blades which will produce strips of biscuit (15) filled with the corresponding granular material (10), wherein the upper and lower laminas of biscuit proper are attached to each other by their longitudinal edges, as well as reusable trimmings (16) of biscuit dough.

Next, and as is shown in figure 5, the aforementioned strips (15) of filled biscuit are subjected to a stage of transversal cutting, for example based on a single knife (17) with radial blades the speed of rotation of which will be adapted so that in the cutting units (18) are produced identical to the biscuits it is intended to obtain, each individual biscuit (18) being closed in this last cutting operation by the two edges of its upper and lower layer which remained open in the previous cutting stage, that of producing the longitudinal strips (15).

Finally, the individual biscuits (18) so obtained undergo the classic operation of being baked, for the definitive finishing thereof, for example at a temperature of between 160 and 200° C.

In this way, as previously stated and as shown in the aforementioned figure 1, a biscuit is obtained with an external wrapping (1-2) based on biscuit proper, closed on all its perimeter, which contains on its interior the granular material (4), perfectly protected and stabilized, invisible from the exterior and with a clear differentiation of flavours between the products that form part of said biscuit.

## Claims

1. - Filled biscuit, comprising a external wrapping obtained on a basis of two laminas (1-2) the wrapping being completely closed, defining an internal pocket and wherein a filling material is housed within said pocket, **characterised in that** the filling material is essentially a granular product (4) physically free from the laminas (1-2), and wherein said two laminas have been attached to each other on their perimeter (3) during the cutting stages of the biscuit and when the dough constituting the biscuit proper was still soft, and after introducing between them the essentially granular product (4), the granular product (4), being thereby hidden and retained inside the aforementioned wrapping (1-2), with clear differentiation between the flavours of the wrapping and the filling material that form part of the biscuit.

2. - Filled biscuit according to claim 1 wherein the granular product (4) is selected from the group comprising: cereals, dried fruits, rolled corn cereals, puffed rice cereals, puffed chocolate-coated rice cereals or mixtures of rolled or puffed cereals.

3. - Production procedure of the biscuit of the previous claims, **characterised in that** therein the following operational stages take place:
- starting from the base materials constituting the biscuit proper, a lower lamina (5) is obtained, of duly measured thickness, of predetermined width and of undefined length, which is deposited as it is produced on a conveyor belt or similar;
- on the aforementioned lower lamina (5) the essentially granular material is deposited, forming longitudinal and parallel strips (10), of constant width and appreciably separated, leaving between them narrower strips (11) of the lower lamina (5) without such granular material;
- on the previous assembly a second lamina (12) is deposited of biscuit pastry proper, also duly rolled, of characteristics similar to the lower lamina (5);
- the assembly undergoes a stage of measurement and flattening of the laminas (5-12) against the filling material (10);
- the multi-layer band so obtained undergoes a stage of longitudinal cutting to obtain continuous strips (15) of filled biscuit and strips of trimming (16), reusable, based on biscuit pastry;
- the body of strips of filled biscuit (15) obtained in the previous stage, undergoes a transversal cutting stage in which biscuit units (18) are obtained with their upper and lower layers closed on the perimeter by the pressure exerted thereupon during the cutting stages;
- the units of filled biscuit (18) finally undergo a stage of conventional baking.

## Patentansprüche

1. Gefüllter Keks, umfassend eine äussere Hülle, erhalten auf Basis von zwei Plättchen (1-2), wobei die Hülle vollständig geschlossen ist, eine Innentasche definiert und wobei ein Füllmaterial in der Tasche aufgenommen ist, **dadurch gekennzeichnet, dass** das Füllmaterial im wesentlichen ein granulares Produkt (4), physikalisch frei von den Plättchen (1-2), ist, und worin die zwei Plättchen an ihrer Umrandung (3), während der Schneidschritte des Kekses und als der die Kekshülle darstellende Teig noch weich war und nach Einbringen des im wesentlichen granularen Produkts (4) zwischen diesen, aneinander befestigt wurden, wobei das granulare Produkt (4) **dadurch** verborgen und in der oben genannten Hülle (1-2) zurückgehalten wird, mit klarer Unterscheidung zwischen dem Geschmack der Hülle und des Füllmaterials, die einen Teil des Kekses bilden.

2. Gefüllter Keks gemäss Anspruch 1, worin das granulare Produkt (4) aus der Gruppe, umfassend Cerealien, getrocknete Früchte, Maisflocken, Puffreiscerealien, schokoladenbeschichtete Puffreiscerealien oder Mischungen von Flocken- oder Puffcerealien, ausgewählt ist.

3. Herstellungsverfahren für den Keks der vorangehenden Ansprüche, **dadurch gekennzeichnet, dass** darin die folgenden Arbeitsschritte stattfinden:
• ausgehend von den den Kekskörper bildenden Grundmaterialien wird ein unteres Plättchen (5) mit ordnungsgemäss gemessener Dicke, vorbestimmter Breite und undefinierter Länge erhalten, das so wie es hergestellt wurde auf einem Förderband oder dergleichen abgelegt wird;
• auf das zuvor erwähnte untere Plättchen (5) wird das im wesentlichen granulare Material aufgebracht, das longitudinale und parallele Streifen (10) von konstanter Breite und deutlich getrennt bildet, die zwischen ihnen engere Streifen (11) des unteren Plättchens (5) ohne ein solches granulares Material freilassen;
• auf der vorherigen Anordnung wird ein zweites Plättchen (12) der Keksgebäckhülle ebenfalls ordnungsgemäss gerollt mit Eigenschaften, ähnlich dem unteren Plättchen (5) aufgebracht;
• die Anordnung durchläuft einen Schritt des Messens und Flachdrückens der Plättchen (5-12) gegen das Füllmaterial (10);
• das so erhaltene Mehrschichtband durchläuft einen Schritt des longitudinalen Schneidens, um kontinuierliche Streifen (15) von gefülltem Keks und Beschnittstreifen (16), wiederverwendbar, basierend auf Keksgebäck, zu erhalten;
• der im vorherigen Schritt erhaltene Körper aus Streifen an gefülltem Keks (15) durchläuft einen transversalen Schneidschritt, in dem Kekseinheiten (18), deren Ober- und Unterschichten an der Umrandung durch den Druck, der darauf während der Schneidschritte ausgeübt wird, geschlossen sind, erhalten werden;
• die gefüllten Kekseinheiten (18) durchlaufen schliesslich einen herkömmlichen Backschritt.

## Revendications

1. Biscuit fourré, comprenant un enrobage externe obtenu sur la base de deux lamelles (1-2), l'enrobage étant complètement fermé, définissant une poche interne et où le matière de remplissage est logé dans la dite poche, **caractérisé en ce que** la matière de remplissage est un produit essentiellement granuleux (4) physiquement libre des lamelles (1-2), et où les dites lamelles ont été liées l'une à l'autre sur leur périmètre (3) durant les étapes de coupage du biscuit et quand la pâte constituant le biscuit proprement dit était toujours molle, et après l'introduction entre elles du produit essentiellement granuleux (4), le produit granuleux (4) étant caché et retenu à l'intérieur de l'enrobage mentionné ci-dessus (1-2), avec une différentiation claire entre les saveurs de l'enrobage et de la matière de remplissage qui forment les parties du biscuit.

2. Biscuit fourré selon la revendication 1 **caractérisé en ce que** le produit granuleux (4) est sélectionné parmi le groupe comprenant : les céréales, les fruits secs, les céréales roulées de maïs, les céréales soufflées de riz, les céréales recouvertes de chocolat soufflées de riz ou les mélanges des céréales roulées ou soufflées.

3. Procédé de production du biscuit selon les revendications précédentes, **caractérisé en ce que** les étapes opérationnelles suivantes prennent place :
- commençant avec les matières de base constituant le biscuit proprement dit, une lamelle basse (5) est obtenue, d'une épaisseur dûment mesurée, d'une largeur prédéterminée et d'une longueur indéfinie, qui est déposé comme si elle était produite sur une bande transporteuse ou similaire ;
- sur la lamelle basse mentionnée ci-dessus (5) la matière essentiellement granuleuse est déposée, formant des bandes longitudinales et parallèles (10), d'une largeur constante et appréciablement séparées, laissant entre elles des bandes étroites (11) de la lamelle basse (5) sans une telle matière granuleuse ;
- sur le précédent assemblage une seconde lamelle (12) est déposée sur la pâte du biscuit proprement dite, aussi dûment enroulée, de caractéristiques similaires à la lamelle basse (5) ;
- l'assemblage subit une étape de mesures et d'aplanissement des lamelles (5-12) contre la matière de remplissage (10) ;
- la bande multicouche ainsi obtenue subit une étape de coupage longitudinal pour obtenir des bandes continues (15) de biscuit fourré et des bandes de parage (16), réutilisables, basées sur la pâte de biscuit ;
- le corps de bandes du biscuit fourré (15) obtenu dans la précédente étape, subit une étape de coupage transversal dans laquelle les unités de biscuit (18) sont obtenues avec leurs bandes inférieures et supérieures fermées sur le périmètre par la pression exercée sur elles durant les étapes de coupage ;
- les unités de biscuit fourré (18) subissent finalement une étape de cuisson conventionnelle.
